# EUROPÄISCHE PATENTSCHRIFT

(11) **EP 1 303 088 B1**
(45) Veröffentlichungstag und Bekanntmachung des Hinweises auf die Patenterteilung: **14.07.2004**
(21) Anmeldenummer: 02022920.9
(22) Anmeldetag: 10.10.2002
(51) Int. Cl.: H04L 12/56

(54) **Verfahren und Anordnung zur Datenübertragung zwischen einer Steuereinheit und einem Bluetooth-Access-Point**
Method and apparatus for data transmission between a managing entity and a Bluetooth Access point
Méthode et dispositif pour la transmission de données entre une entité de contrôle et une borne d'accès Bluetooth

(30) Priorität: 10.10.2001 DE 10149956
(43) Veröffentlichungstag der Anmeldung: 16.04.2003
(73) Patentinhaber: Tenovis GmbH & Co. KG, 60326 Frankfurt am Main (DE)
(72) Erfinder: Mäntele, Stefan, 61350 Bad Homburg (DE); Strenge, Klaus, 61169 Friedberg (DE)
(74) Vertreter: Patentanwaltskanzlei WILHELM & BECK

(56) Entgegenhaltungen:
- WO-A-01/69802
- "Host Controller Interface funtional specification" BLUETOOTH SPECIFICATION VERSION 1.1, 22. Februar 2001 (2001-02-22), Seiten 544-825, XP002230340

## Beschreibung

Die vorliegende Erfindung betrifft ein Verfahren und eine Anordnung zur Übertragung von Daten zwischen einer Steuereinheit und einem Bluetooth-Access-Point.

Die drahtlose Datenübertragung ermöglicht eine ortsungebundene Kommunikation zwischen Geräten. Hierdurch entfallen die in der Regel schwierig zu realisierenden Kabelverbindungen zwischen den Geräten. Insbesondere die auf Funk basierenden drahtlosen Übertragungssysteme, bei denen auch Verbindungen zwischen verschiedenen Räumen möglich sind, gewinnen aufgrund ihrer einfachen Realisierung bei Installationen von Kurzstreckenverbindungen zunehmend an Bedeutung.

Eine Möglichkeit eines drahtlosen Übertragungssystems stellt die weit verbreitete Bluetooth-Technologie dar. Nicht zuletzt aufgrund der geringen Ausmaße der Sende- und Empfangsmodule sowie der hohen Datenübertragungsraten dieses Systems kommt Bluetooth sowohl in mobilen Geräten, als auch bei ortsfesten Netzwerkanwendungen, wie z.B. Netzwerkanbindungen von Computern, Telefonanlagen oder Druckerinstallationen zum Einsatz.

Um den Transfer von Daten, Bild- oder Sprachinformationen über drahtlose Bluetooth-Module zu steuern, überträgt zunächst ein als Steuereinheit dienender Host-Rechner Daten an einen mit dem Host-Rechner physikalisch verbundenen Bluetooth-Access-Point, das die Daten wiederum über eine 2,4 GHz Funkverbindung z.B. an ein mobiles Bluetooth-Gerät sendet. Die empfangenen Daten können dann wiederum an eine mit dem mobilen Bluetooth-Gerät über eine physikalisch Datenübertragungsstrecke verbundene Datenverarbeitungseinheit weitergeleitet werden.

Zur Datenübertragung zwischen dem Host-Rechner und dem mit dem Host-Rechner verbundenen Bluetooth-Access-Point kann eine gemeinsame Kommunikationsschnittstelle, das sog. (universelle) Host-Controller-Interface (HCI) verwendet werden. Das Host-Controller-Interface stellt dabei einen Standard zur Steuerung der Datenübertragung von einem Host-Rechner zu verschiedenen Bluetooth-Access-Points unterschiedlicher Hersteller zur Verfügung, in dem es die Daten in spezielle HCI-Informationen übersetzt, die von entsprechenden HCI-Schnittstellen aller Bluetooth-Access-Points interpretiert werden können. Die in dieser Beschreibung sowie den Ansprüchen verwendete Bezeichnung "HCI-Informationen" umfasst dabei sowohl die vom Host-Rechner zum Bluetooth-Access-Point gesendete HCI-Kommandos und die vom Bluetooth-Access-Point zum Host-Rechner gesendeten HCI-Events als auch die zwischen dem Host-Rechner und Bluetooth-Access-Point ausgetauschten SCO-Datenpakete (Synchronous Connection Oriented) und ACL-Datenpakete (Asynchronous Connectionless), die ebenfalls als HCI-Datenpakete gesendet werden.

Als physikalische Datenübertragungsstrecke zwischen einem Bluetooth-Access-Point und einem Host-Rechner sind dabei die unter anderem in der Bluetooth-Spezifikation "Bluetooth SIG Technical Standard" (Version 1.1), Part H-1 "Host Controller Interface Functional Spec." (S. 519 ff): Chapter 1 "Introduction"; Part H-2 "HCI USB Transport Layer" (S. 763 ff): Chapter 1 "Overview"; Part H-3 "HCI RS232 Transport Layer (S. 779 ff): Chapter 1 "Introduction"; Part H-4 "HCI UART Transport Layer (S. 803 ff): Chapter 1 "Introduction" beschriebenen Kabelverbindungen mit den dazugehörigen Transportprotokollen vorgesehen.

Demnach werden gegenwärtig die folgenden drei Kabelverbindungen und ihre jeweiligen Transportprotokolle zum Transfer von HCI-Informationen zwischen Host-Rechner und Bluetooth-Access-Point eingesetzt, nämlich USB (Universal Serial Bus), serielle Schnittstelle (RS-232) und UART (Universal Asynchronous Receiver and Transmitter).

Den wesentlichsten Nachteil beim Transport von HCI-Informationen mit Hilfe eines der drei spezifizierten Kabelverbindungstypen stellen die technischen Schwierigkeiten bei der Realisierung von langen Verbindungsstrecken mit einer Vielzahl von Bluetooth-Access-Points dar.

Die Aufgabe der Erfindung besteht darin, ein Verfahren zur Übertragung von Daten zwischen einer Steuereinheit und einem Bluetooth-Access-Point bereitzustellen, das eine einfache und kostengünstige Anbindung des Bluetooth-Access-Points an die Steuereinheit ermöglicht. Darüber hinaus ist es Aufgabe der Erfindung eine Anordnung bereitzustellen, die eine kostengünstige Realisierung eines Bluetooth-Netzwerks erlaubt.

Diese Aufgabe wird durch ein Verfahren nach Anspruch 1 sowie durch eine Anordnung nach Anspruch 4 gelöst. Weitere vorteilhafte Ausgestaltungen sind in den abhängigen Ansprüchen angegeben.

Gemäß der Erfindung wird als Transportprotokoll für den Austausch von HCI-Informationen zwischen einem Host-Rechner und einem Bluetooth-Access-Point ein Internet-Kommunikationsprotokoll verwendet. Mit Hilfe dieses Internet-Protokolls lässt sich ein flächendeckendes drahtloses Bluetooth-Zugangsnetzwerk bestehend aus vielen Bluetooth-Access-Points (Basisstationen) relativ schnell und kostengünstig unter Ausnutzung der meist bereits existierenden (Firmen-) Netzwerkinfrastruktur (Intranet) aufbauen. Ein einziger Host-Rechner kann gleichzeitig eine Vielzahl räumlich weit entfernter Bluetooth-Access-Points steuern. Außerdem sind Anwendungen möglich, bei denen TCP/IP- bzw. UDP/IP-fähige Bluetooth-Access-Points direkt über das öffentliche Internet betrieben werden.

Durch die Datenverbindung von Bluetooth-Access-Points mit Host-Rechnern mit Hilfe von Internet-Kommunikationsprotokollen wird eine Anordnung ermöglicht, bei der mehrere Host-Rechner mit mehreren Bluetooth-Access-Points auch über beliebig lange Strecken verbunden sind. Die Anbindung der Geräte an das Internet ermöglicht sogar ein weltumspannendes Geräte-Sharing.

In vorteilhaften Ausführungsformen der Erfindung werden zur Übertragung der HCI-Informationen zwischen dem Host-Rechner und dem Bluetooth-Access-Point die Internet-Kommunikationsprotokolle TCP/IP (Transmission Control Protocol/Internet Protocol), UDP/IP (User Datagram Protocol/Internet Protocol) und RTP/IP (Real Time Transport Protocol/Internet Protocol) verwendet. Die Verwendung des Protokollpaares TCP/IP hat den Vorteil, dass sich hiermit eine gesicherte Kommunikation zwischen Host-Rechner und Bluetooth-Access-Point erreichen lässt. Die Verwendung der Protokollpaare UDP/IP und/oder RTP/IP hat den Vorteil, dass sich hiermit vor allem bei zeitkritischen Anwendungen (z.B. Sprache, Video) eine möglichst verzögerungslose Übertragung gewährleisten lässt. Somit kann die Datenübertragung entsprechend den Bedingungen der jeweiligen Datenübertragungstrecke besonders einfach durch Anpassung des Internet-Kommunikationsprotokolls optimiert werden.

In einer weiteren vorteilhaften Ausführungsform der Erfindung werden die oberen Protokollschichten des Bluetooth-Protokollschichtstapels im Host-Rechner verarbeitet. Nach dem Transport der in HCI-Informationen umgesetzten Daten mit Hilfe von Internet-Kommunikationsprotokollen müssen im Bluetooth-Access-Point nach Umsetzung der HCI-Informationen in Bluetooth-Daten lediglich die unteren Protokolle des Bluetooth-Protokollschichtstapels ausgeführt werden, wodurch sich der hardwareseitige Aufwand des Bluetooth-Access-Points reduziert. Hierdurch kann der Bluetooth-Access-Point kostengünstiger hergestellt werden.

Aufgrund der reduzierten Komplexität seiner Hardware erweist sich der Bluetooth-Access-Point als weniger anfällig gegenüber Störungen und damit auch wartungsfreier, was insbesondere bei großen Bluetooth-Netzwerken vorteilhaft ist. Darüber hinaus weisen die Bluetooth-Access-Points aufgrund des geringeren hardwareseitigen Aufwandes auch eine geringere Leistungsaufnahme auf, wodurch sie ökonomischer betrieben werden können.

Die Erfindung wird im Folgenden anhand der beigefügten Zeichnungen näher erläutert. Es zeigen:
Fig. 1 schematisch eine System-Architektur mit einem Host-Rechner und einem Bluetooth-Access-Point,
Fig. 2 schematisch einen Aufbau eines herkömmlichen Bluetooth-Netzwerks, und
Fig. 3 schematisch einen Aufbau eines erfindungsgemäßen Bluetooth-Netzwerks.

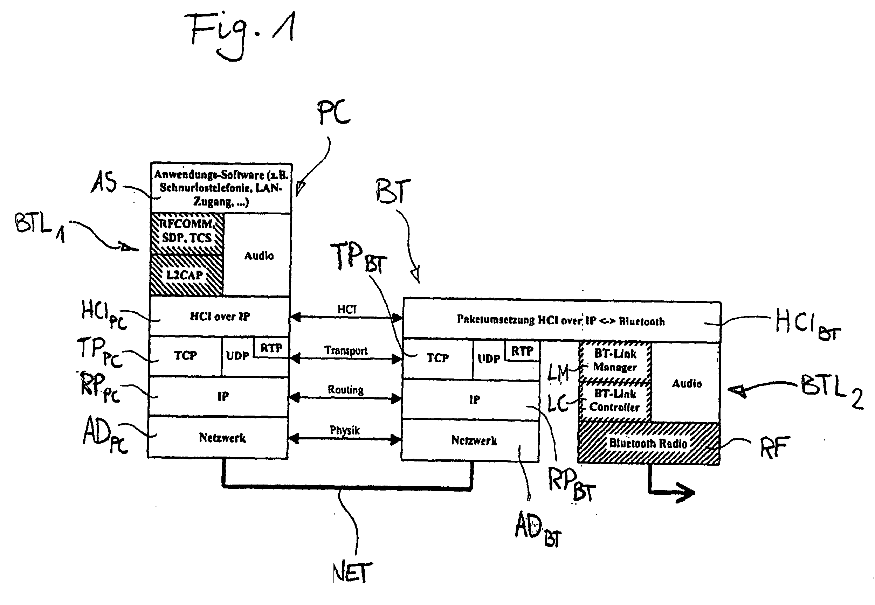

Figur 1 zeigt eine einfache Anordnung bestehend aus einem Host-Rechner PC und einem Bluetooth-Access-Point BT.

Zur Verdeutlichung des erfindungsgemäßen Verfahrens werden der Host-Rechner PC und der Bluetooth-Access-Point BT in einer an das OSI-Schichtenmodell (Open Systems Interconnection) angelehnter Weise schematisch dargestellt. Dabei weist sowohl die Soft-, die Firm- als auch die Hardware des Host-Rechners PC und des Bluetooth-Access-Points BT verschiedene Schichten auf, denen jeweils spezielle Protokolle zugeordnet sind. Alle Schichten des Host-Rechners PC bzw. des Bluetooth-Access-Points BT sind jeweils in einem Protokollschichtstapel zusammengefasst.

Das 0SI-Schichtenmodell bildet ein internationales Referenzmodell für die Datenübertragung in Netzwerken. Es besteht aus den folgenden sieben Schichten (Layer): zwei Hardware-Schichten, dem sog. Physical Layer und Data-Link-Layer, zwei Übertragungsschichten dem sog. Network-Layer und Transport-Layer und drei OSI-Anwendungsschichten dem sog. Session-Layer, Presentation-Layer und Application-Layer.

Für die Kommunikation zwischen dem Host-Rechner PC und dem Bluetooth-Access-Point BT mittels eines Internet-Kommunikationsprotokolls lässt sich, wie in Figur 1 gezeigt, die folgende Zuordnung machen:

Physical Layer (Schicht 1): Die physikalische Bitübertragungsschicht regelt auf der Ebene von Kabeln und Steckern die bitweise Übertragung der Daten über das Netzwerk. Der physikalischen Bitübertragungsschicht entsprechen im Host-Rechner PC und im Bluetooth-Access-Point BT gemäß der Figur 1 die Netzwerkadapter AD_{PC}, AD_{BT}.

Data-Link-Layer (Schicht 2) und Network-Layer (Schicht 3): Die Datensicherungsschicht (Data-Link-Layer) bündelt die Daten zu Paketen und fügt ihnen im Header und Trailer Informationen hinzu, die zur Weiterleitung benötigt werden. Die Datensicherungsschicht ist für den Transport der Datenpakete von Knoten zu Knoten und für die Fehlerkontrolle zuständig. Die Netzwerkschicht (Network-Layer) dagegen regelt die Weiterleitung der Datenpakete unter Zuhilfenahme der Datensicherungsschicht. Sie übernimmt die Adressierung der Datenpakete und deren Routing im Netz. Das Protokoll, das der Netzwerkschicht in der Erfindung zugrunde liegt, ist das Internet-Protokoll (IP). Der Datensicherungsschicht und der Netzwerkschicht entsprechen im Host-Rechner PC und im Bluetooth-Access-Point BT, wie sie in Figur 1 dargestellt sind, die Routing-Protokollschichten RP_{PC}, RP_{BT}.

Transport-Layer (Schicht 4): Die Transportschicht regelt die Übermittlung von Datenpaketen zwischen Host-Rechner PC und Bluetooth-Access-Point BT. Sie überprüft, ob alle Pakete vollständig angekommen sind. Das Transmission Control Protocol (TCP) kommt hier gemäß der Erfindung zum Einsatz. Der Transportschicht entspricht im Host-Rechner PC und im Bluetooth-Access-Point BT die Transport-Protokollschichten TP_{PC}, TP_{BT}.

Session-Layer (Schicht 5), Presentation-Layer (Schicht 6) und Application-Layer (Schicht 7): Die Verbindungsschicht (Session-Layer) stellt eine Verbindung zwischen den Prozessen her, die auf dem Host-Rechner PC und dem Bluetooth-Access-Point BT laufen. Sie sorgt für den Aufbau der Übertragungssitzung (Verbindung) und einen kontinuierlichen Wechsel von Anfragen und Antworten zwischen den einzelnen Anwendungen. Die Darstellungsschicht (Presentation-Layer) ist für die Umwandlung der Daten in das für die jeweilige Anwendung erforderliche Format zuständig. Außerdem komprimiert sie Texte und konvertiert verschiedene Codes, die vom Host-Rechner PC und vom Bluetooth-Access-Point BT verwendet werden. Die Anwendungsschicht (Application-Layer) kümmert sich um Anwendungen, die dem Nutzer direkt zur Verfügung stehen, wie beispielsweise Dateiübertragungen oder E-Mail-Programme. Der Nutzer erkennt die Datenübertragung in Form von Anfragen oder Antworten. Der Verbindungsschicht, der Darstellungsschicht und der Anwendungsschicht entsprechen im Host-Rechner PC die unter Anwendungssoftware AS und Host-Controller-Interface HCI_{PC} zusammengefassten Protokollschichten und im Bluetooth-Access-Point BT die als Bluetooth-Host-Controller HCI_{BT} bezeichnete Protokollschicht, wie in Figur 1 gezeigt ist.

Für die Bluetooth-seitige Kommunikation weist der Bluetooth-Access-Point BT in Figur 1 einen eigenen Protokollschichtstapel bestehend aus Bluetooth-Radio RF, Bluetooth-Link-Controller LC, Bluetooth-Link-Manager LM, Host-Controller-Interface HCI_{PC}, HCI_{BT}, Logical-Link-Control-and-Adaption-Protocol L2CAP sowie RFCOMM (Transportprotokoll mit Emulation der Seriellen Schnittstelle), Service Discovery Protocol SDP oder Telephony Control protocol Specification TCS auf. Der Bluetooth-Protokollschichtstapel kann in untere und obere Protokollschichten BTL₂, BTL₁ unterteilt werden, wobei die unteren Protokollschichten BTL₂ der Funktion eines Transportsystems und die oberen Protokollschichten BTL₁ der Funktion eines Anwendungssystems entsprechen.

Gemäß der Erfindung kann die Verarbeitung eines Teils des Bluetooth-Protokollschichtstapels im Host-Rechner PC stattfinden. Eine spezielle Software im leistungsstarken Host-Rechner PC übernimmt dabei vorteilhafterweise die Verarbeitung der oberen Bluetooth-Protokollschichten (BTL₁), die die Bluetooth-Protokolle RFCOMM, Service Discovery Protocol SDP, Telephony Control protocol Specification TCS, L2CAP und einen Teil der bei Sprachanwendungen durchgeführten Audioprozessierung enthalten. Der Bluetooth-Access-Point BT, der die unteren Bluetooth-Protokollschichten (BTL₂), die die Bluetooth-Protokolle Link Manager LM, Link Controller LC und Bluetooth Radio RF sowie den restlichen Teil der Audioprozessierung beinhalten, wird aufgrund dieser Arbeitsteilung deutlich entlastet. Daher kann der Bluetooth-Access-Point BT einen deutlich geringeren Hardwareaufwand aufweisen und somit auch kostengünstiger ausfallen. In Folge des reduzierten Hardwareaufwandes weist der Bluetooth-Access-Point BT darüber hinaus einen deutlich geringeren Energieverbrauch auf, wodurch sich die Betriebskosten des Bluetooth-Access-Points BT reduzieren.

Als Host-Rechner PC dient hierbei vorzugsweise ein handelsüblicher Personal-Computer. Der Bluetooth-Access-Point BT ist ein herkömmliches Bluetooth-Funkmodul, das mit einem TCP/IP- bzw. UDP/IP-Zugang versehen wurde. Der Host-Rechner PC und der Bluetooth-Access-Point BT verfügen jeweils über einen Netzwerkadapter AD_{PC}, AD_{BT}, über den der Host-Rechner PC und der Bluetooth-Access-Point BT an eine gemeinsame Netzwerkverbindung NET angebunden sind. Dabei ist die Netzwerkverbindung NET vorzugsweise als eine nach IEEE 802.3 Standard spezifizierte Ethernet-Verbindung ausgebildet.

Eine im Host-Rechner PC ablaufende Anwendungssoftware AS soll den Bluetooth-Access-Point BT steuern, um eine drahtlose Verbindung zu einem anderen Bluetooth-Modul (hier nicht gezeigt) zum Datenaustausch aufzubauen. Zur gegenseitigen Kommunikation weisen der Host-Rechner PC und der Bluetooth-Access-Point BT eine gemeinsame Schnittstelle auf, die sicherstellt, dass die Steuerbefehle des Host-Rechners PC und des Bluetooth-Access-Points BT untereinander interpretiert werden können. Hierbei dient als gemeinsame Kommunikationsschnittstelle das standardisierte HCI (Host Control Interface), das im Host-Rechner PC vorzugsweise als HCI_{PC}-Treiber in Form Software und im Bluetooth-Access-Point BT vorzugsweise als Bluetooth-Host-Controller HCI_{BT} in Form von Firmware realisiert ist.

Von der Anwendungssoftware AS generierte Steuerbefehle werden vom HCI_{PC}-Treiber in HCI-Informationen umgesetzt. Die HCI-Informationen werden in den Transport- und Routing-Protokollschichten TP_{PC}, RP_{PC} des Host-Rechners PC mit einem TCP/IP- bzw. UDP/IP-Header versehen und vom Netzwerkadapter AD_{PC} des Host-Rechners PC als TCP/IP- bzw. UDP/IP-Pakete über die physikalische Netzwerkverbindung NET an die Adresse des Bluetooth-Access-Points BT gesendet. Die als TCP/IP- bzw. UDP/IP-Pakete gesendete HCI-Informationen werden vom Netzwerkadapter AD_{BT} des Bluetooth-Access-Points BT empfangen und an die Transport- und Routing-Protokollschichten TP_{BT}, RP_{BT} des Bluetooth-Access-Points BT weitergeleitet, wo der TCP/IP- bzw. UDP/IP-Overhead der HCI-Informationen wieder entfernt wird, so dass sie vom Bluetooth-Host-Controller HCI_{BT} interpretiert und ausgeführt werden können. Der Bluetooth-Host-Controller HCI_{BT} wiederum führt dann über den Link-Manager LM, den Link-Controller LC und das Bluetooth-Radio RF die eigentliche drahtlose Bluetooth-Kommunikation zur Bluetooth-Gegenstelle aus.

Sofern nach erfolgtem Verbindungsaufbau zur Bluetooth-Gegenstelle ein uni- oder bidirektionaler Datenaustausch stattfinden soll, werden die vom Bluetooth-Access-Point BT empfangenen Daten ebenfalls über TCP/IP bzw. UDP/IP zum Host-Rechner PC übertragen. Hierzu werden empfangene Steuerbefehle vom Bluetooth-Host-Controller HCI_{BT} in HCI-Informationen umgesetzt. Anschließend werden die HCI-Informationen des Bluetooth-Host-Controllers HCI_{BT} in den Transport- und Routing-Protokollschichten TP_{BT}, RP_{BT} des Bluetooth-Access-Points BT mit TCP/IP- bzw. UDP/IP-Headern versehen und vom Netzwerkadapter AD_{BT} des Bluetooth-Access-Points BT als TCP/IP- bzw. UDP/IP-Pakete über die physikalische Netzwerkverbindung NET an die Adresse des Host-Rechners PC gesendet. Die als TCP/IP- bzw. UDP/IP-Pakete gesendeten HCI-Informationen werden vom Netzwerkadapter AD_{PC} des Host-Rechners PC empfangen und an die Transport- und Routing-Protokollschichten TP_{PC}, RP_{PC} des Host-Rechners PC weitergeleitet, wo der TCP/IP- bzw. UDP/IP-Overhead der HCI-Informationen wieder entfernt wird, so dass sie vom Host-Controller-Interface HCI_{PC} des Host-Rechners PC interpretiert und ausgeführt werden können.

Ein vom Host-Controller-Interface HCI_{PC} des Host-Rechners PC bzw. vom Bluetooth-Host-Controller HCI_{BT} als Antwort auf empfangene HCI-Informationen generiertes Event kann dann ebenfalls als HCI-Information in der gleichen Weise über TCP/IP bzw. UDP/IP zum Bluetooth-Access-Point BT bzw. zum Host-Rechner PC zurücktransportiert werden.

Das TCP-Protokoll enthält eine Fluss- und Fehlerkontrolle der übermittelten Daten, so dass eine gesicherte Kommunikation zwischen dem Host-Rechner PC und dem Bluetooth-Access-Point BT gewährleistet ist. Bei zeitkritischen Anwendungen (z.B. Sprache, Video) ist das TCP-Protokoll aufgrund der Overheadbedingten Zeitverzögerung der Datenpakete nicht geeignet. Darüber hinaus ist bei relativ sicheren Datenübertragungsstrecken NET, die insbesondere charakteristisch für kleinere Netzwerke sind, die Verwendung von aufwendigen Fluss- und Fehlerkontrollen nicht notwendig. Hier bieten sich als Alternativen die Protokolle UDP und RTP an, die zugunsten einer möglichst verzögerungslosen Übertragung auf eine Datensicherung verzichten.

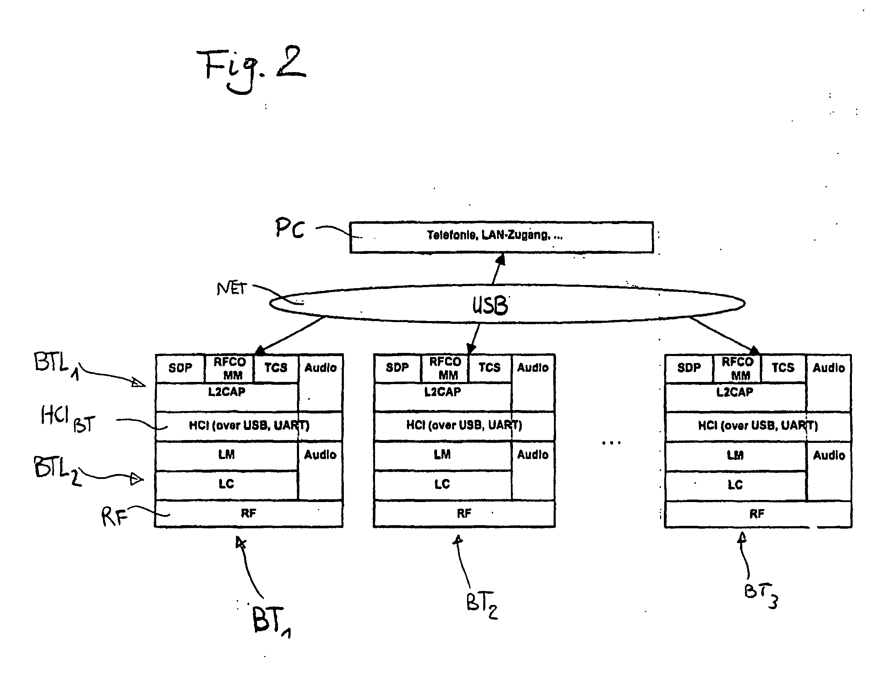

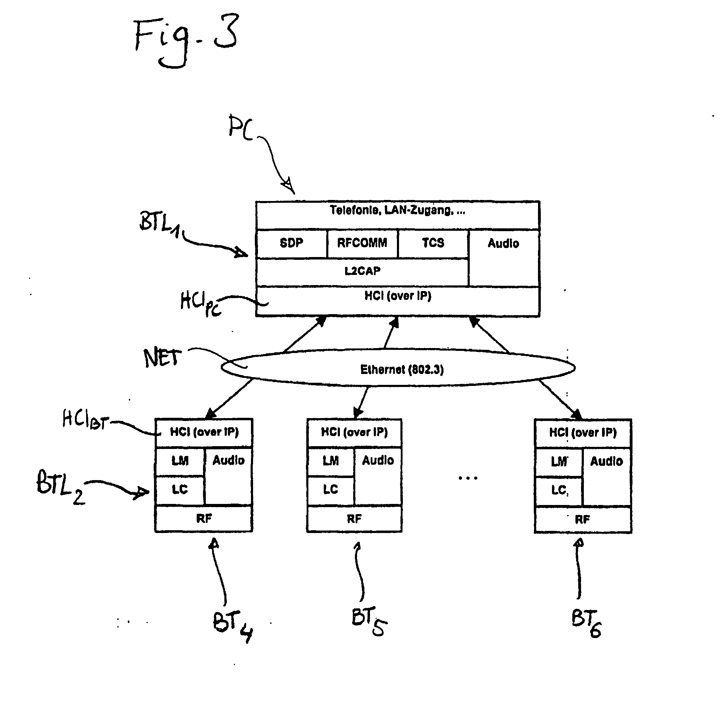

In der folgenden Figur 2 und Figur 3 werden zur Verdeutlichung der erfindungsgemäßen Anordnung zwei Anbindungsmöglichkeiten von mehreren Bluetooth-Access-Points BT an einem Host-Rechner PC dargestellt.

Figur 2 zeigt einen Aufbau eines herkömmlichen Bluetooth-Netzwerks mit einem Host-Rechner PC und mehreren (hier drei) Bluetooth-Access-Points BT₁, BT₂, BT₃, die mit dem Host-Rechner PC über USB-Kabelverbindungen NET verbunden sind. Dabei weisen der Host-Rechner PC und die Bluetooth-Access-Points BT₁, BT₂, BT₃ jeweils eine USB-Schnittstelle (hier nicht gezeigt) auf. Eine solche Bluetooth-Anordnung kann z.B. ein mittels eines USB-Hubs NET mit Bluetooth-Access-Points BT₁, BT₂, BT₃ verbundener zentraler Server PC sein, auf dem eine Anwendungssoftware AS zur Telefonie oder zum Netzwerkzugang abläuft. Über jeden dieser Bluetooth-Access-Points BT₁, BT₂, BT₃ können Geräte, wie z.B. Drucker, Anlagen zur Sprach- oder Bildkommunikation, sowie weitere Computer, mittels Bluetooth drahtlos an dem Bluetooth-Netzwerk angebunden werden. Der Host-Rechner PC kann dann auf jedes der über die Bluetooth-Access-Points BT₁, BT₂, BT₃ an dem USB-Hub NET angebundenen Geräte zugreifen.

Da die Bluetooth-Access-Points BT₁, BT₂, BT₃ aufgrund der Verarbeitung des gesamten Bluetooth-Protokollschichtstapels stark belastet sind, weisen sie eine aufwendige Hardware auf. Hierbei erfordert die hohe Belastung der Bluetooth-Access-Points BT₁, BT₂, BT₃ insbesondere ausreichend Speicher sowie jeweils einen leistungsfähigen Prozessor. Diese beiden Komponenten machen jedoch einen relevanten Teil des Anschaffungskosten der Bluetooth-Hardware aus. Darüber hinaus erweisen sich die Bluetooth-Access-Points BT₁, BT₂, BT₃ der Figur 2 aufgrund der relativ hohen Komplexität ihrer Bluetooth-Hardware als vergleichsweise störungsintensiv.

Zur Realisierung eines Bluetooth-Netzwerks mit einer Vielzahl von Bluetooth-Access-Points BT₁, BT₂, BT₃ ist das in Figur 2 dargestellte Prinzip der Verbindung von Bluetooth-Access-Points BT₁, BT₂, BT₃ und Server PC nicht geeignet. Zum einen weisen Bluetooth-Access-Points BT₁, BT₂, BT₃, bei denen der gesamte Bluetooth-Protokollschichtstapel intern verarbeitet wird, eine aufwendige und kostenintensive Hardware auf, zum anderen lassen sich USB-Kabel bzw. USB-Hubs nicht für sehr lange Datenübertragungsstrecken NET verwenden.

Figur 3 zeigt den Aufbau eines erfindungsgemäßen Bluetooth-Netzwerks. Hierbei ist ein als zentraler Server agierender Host-Rechner PC mit mehreren (hier drei) Bluetooth-Access-Points BT₄, BT₅, BT₆ über ein Ethernet-Netzwerk NET verbunden. Dies kann z.B. ein mittels eines Netzwerkadapters AD_{PC} an einem Firmennetzwerk NET angebundener zentraler Server PC sein, auf dem eine Anwendungssoftware AS zur Telefonie oder zum Netzwerkzugang abläuft, und der mittels TCP/IP mit mehreren Bluetooth-Access-Points BT₄, BT₅, BT₆ die ebenfalls über jeweils einen eigenen Netzwerkadapter AD_{BT} an das Firmennetzwerk NET angebunden sind, kommuniziert. Über jeden dieser Bluetooth-Access-Points BT₄, BT₅, BT₆ können Geräte, wie z.B. Drucker, Anlagen zur Sprach- oder Bildkommunikation, sowie weitere Computer, mittels Bluetooth drahtlos an das Firmennetzwerk NET angebunden werden. Der Host-Rechner PC kann dann auf jedes der über die Bluetooth-Access-Points BT₄, BT₅, BT₆ an das Firmennetzwerk NET angebundenen Geräte zugreifen.

Im Unterschied zu der in Figur 2 dargestellten Anordnung werden hierbei die Protokolle der oberen Bluetooth-Protokollschichten BTL₁ aller Bluetooth-Access-Points BT₄, BT₅, BT₆ gemäß dem in Figur 1 dargestellten Verfahren vom zentralen Server PC übernommen. Zusammen mit geeigneter Software verarbeitet der zentrale Server PC diese Protokolle dabei praktisch nebenbei. Um die zusätzlichen Ressourcen zur Verfügung zu stellen, die mit der steigernden Anzahl der gesteuerten Bluetooth-Module BT₄, BT₅, BT₆ notwendig werden, weist der zentrale Server PC eine ausreichend ausgestattete Hardware auf. Aufgrund der hohen Leistungsfähigkeit moderner Computer, wobei vorteilhafterweise bereits ein geeigneter Personal-Computer über ausreichend Ressourcen verfügt, um unerwünschte Wartezyklen zu vermeiden, die sich aufgrund der Übernahme des oberen Bluetooth-Protokollschichtstapels BTL₁ und der daraus resultierenden zusätzlichen Belastung des Host-Rechners PC ergeben können, ist zur Steuerung der Bluetooth-Access-Points BT₄, BT₅, BT₆ im Bluetooth-Netzwerk keine aufwendige Server-Hardware notwendig. Eine Realisierung des erfindungsgemäßen Bluetooth-Netzwerks kann damit besonders kostengünstig erfolgen.

Aufgrund der Übernahme der oberen Bluetooth-Protokollschichten BTL₁ durch den zentralen Server PC und der daraus resultierenden Entlastung der Bluetooth-Hardware weisen die Bluetooth-Access-Points BT₄, BT₅, BT₆ vorteilhafterweise einen reduzierten Hardwareaufwand im Vergleich zu den Bluetooth-Access-Points BT₁, BT₂, BT₃ der in Figur 2 dargestellten Bluetooth-Anordnung auf. Hierdurch kann das Bluetooth-Netzwerk aus Figur 3 im Vergleich zu der in Figur 2 dargestellten Bluetooth-Anordnung deutlich kostengünstiger realisiert werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- AD_{PC}: Netzwerk-Adapter des Host-Rechners
- AD_{BT}: Netzwerk-Adapter des Bluetooth-Moduls
- AS: Anwendungssoftware
- BT: Bluetooth-Modul
- BTL₁: oberer Bluetooth-Protokollstack
- BTL₂: unterer Bluetooth-Protokollstack
- NET: Physikalische Verbindung zwischen PC und BT
- PC: Host-Rechner (Steuereinheit)
- HCI_{PC}: Host-Control-Interface
- HCI_{BT}: BT-Host-Controller
- IP: Internet-Protocol
- L2CAP: Logical Link Control and Adaptation Protocol
- LC: Link Controller
- LM: Link Manager
- RFCOMM: Transportprotokoll mit Emulation der seriellen Schnittstelle
- RF: Bluetooth-Radio
- RTP: Real Time Transport Protocol
- RP_{pc}: Routing-Protokollschicht des Host-Rechners
- RP_{BT}: Routing-Protokollschicht des BT
- SDP: Service Discovery Protokol
- TCS: Telephony Control protocol Specification
- TCP: Transport Control Protocol
- TP_{PC}: Transport-Protokollschicht des Host-Rechners
- TP_{BT}: Transport-Protokollschicht des BT
- UART: Universal Asynchronous Receiver and Transmitter
- UDP: User Datagram Protocol
- USB: Universal Serial Bus

## Patentansprüche

1. Bidirektionales Datenübertragungsverfahren zwischen einer Steuereinheit (PC) und einem mit der Steuereinheit (PC) über eine Datenübertragungsstrecke (NET) verbundenen Bluetooth-Modul (BT),
**dadurch gekennzeichnet,**
**dass** die Datenübertragung von der Steuereinheit (PC) zum Bluetooth-Modul (BT) die folgenden Verfahrensschritte aufweist:
A) Bereitstellen von Daten in der Steuereinheit (PC);
B) Umsetzen der Daten in Informationen einer Kommunikationsschnittstelle (HCI_{PC}) der Steuereinheit (PC);
C) Übertragen der Informationen der Kommunikationsschnittstelle (HCI_{PC}) der Steuereinheit (PC) über die Datenübertragungsstrecke (NET) von der Steuereinheit (PC) zum Bluetooth-Modul (BT) mit Hilfe eines Internet-Kommunikationsprotokolls; und
D) Umsetzen der Informationen der Kommunikationsschnittstelle (RCI_{PC}) der Steuereinheit in Daten des Bluetooth-Moduls (BT), und
**dass** die Datenübertragung von dem Bluetooth-Modul (BT) zur Steuereinheit (PC) die folgenden Verfahrensschritte aufweist:
E) Bereitstellen von Daten in dem Bluetooth-Modul (BT);
F) Umsetzen der Daten des Bluetooth-Moduls (BT) in Informationen einer Kommunikationsschnittstelle (HCI_{BT}) des Bluetooth-Moduls (BT);
G) Übertragen der Informationen der Kommunikationsschnittstelle (HCI_{BT}) des Bluetooth-Moduls (BT) über die Datenübertragungsstrecke (NET) vom Bluetooth-Modul (BT) zur Steuereinheit (PC) mit Hilfe eines Internet-Kommunikationsprotokolls; und
H) Umsetzen der Informationen der Kommunikationsschnittstelle (HCI_{BT}) des Bluetooth-Moduls (BT) in Daten der Steuereinheit (PC).

2. Verfahren nach Anspruch 1
**dadurch gekennzeichnet,**
**dass** der Verfahrensschritt A) den folgenden Teilschritt umfasst:
A1) Anwenden des Protokolls einer oberen Bluetooth-Protokollschicht (BTL₁) auf die Daten in der Steuereinheit (PC),
**dass** der Verfahrensschritt D) den folgenden Verfahrensschritt umfasst:
D1) Anwenden des Protokolls einer unteren Bluetooth-Protokollschicht (BTL₂) auf die Daten im Bluetooth-Modul (BT),
**dass** der Verfahrensschritt E) den folgenden Verfahrensschritt umfasst:
E1) Anwenden des Protokolls einer unteren Bluetooth-Protokollschicht (BTL₂) auf die Daten im Bluetooth-Modul (BT), und dass der Verfahrensschritt H) den folgenden Verfahrensschritt umfasst:
H1) Anwenden des Protokolls einer oberen Bluetooth-Protokollschicht (BTL₁) auf die Daten in der Steuereinheit (PC).

3. Verfahren nach Anspruch 1 oder 2,
**dadurch gekennzeichnet,**
**dass** als Internet-Kommunikationsprotokoll zum Übertragen der Informationen der Kommunikationsschnittstellen (HCI₁, HCI₂) TCP/IP, UDP/IP oder RTP/IP verwendet wird.

4. Datenübertragungsanordnung mit einer Steuereinheit (PC) und einem mit der Steuereinheit (PC) über eine Datenübertragungsstrecke (NET) verbundenen Bluetooth-Modul (BT),
**dadurch gekennzeichnet,**
**dass** die Steuereinheit (PC) Mittel zum Umsetzen von Daten in Informationen einer Kommunikationsschnittstelle (HCI_{PC}) der Steuereinheit (PC) und Mittel zum Übertragen der Informationen der Kommunikationsschnittstelle (HCI_{PC}) der Steuereinheit (PC) zum Bluetooth-Modul (BT) über die Datenübertragungsstrecke (NET) mit Hilfe eines Internet-Kommunikationsprotokolls aufweist,
**dass** das Bluetooth-Modul (BT) Mittel zum Empfangen der mit Hilfe des Internet-Kommunikationsprotokolls über die Datenübertragungsstrecke (NET) übertragenen Informationen der Kommunikationsschnittstelle (HCI_{PC}) der Steuereinheit (PC) aufweist. Mittel zum Umsetzen der Informationen der Kommunikationsschnittstelle (HCI_{PC}) der Steuereinheit (PC) in Daten des Bluetooth-Moduls (BT), Mittel zum Umsetzen von Daten in Informationen einer Kommunikationsschnittstelle (HCI_{BT}) des Bluetooth-Moduls (PC) und Mittel zum Übertragen der Informationen der Kommunikationsschnittstelle (HCI_{BT}) des Bluetooth-Moduls (BT) zur Steuereinheit (PC) über die Datenübertragungsstrecke (NET) mit Hilfe eines Internet-Kommunikationsprotokolls aufweist, und
**dass** die Steuereinheit (PC) Mittel zum Empfangen der mit Hilfe des Internet-Kommunikationsprotokolls über die Datenübertragungsstrecke (NET) übertragenen Informationen der Kommunikationsschnittstelle (HCI_{BT}) des Bluetooth-Moduls (BT), und Mittel zum Umsetzen der Informationen der Kommunikationsschnittstelle (HCI_{BT}) des Bluetooth-Moduls (BT) in Daten der Steuereinheit (PC) aufweist.

5. Datenübertragungsanordnung nach Anspruch 4,
**dadurch gekennzeichnet,**
**dass** das Bluetooth-Modul (BT) und die Steuereinheit (PC) jeweils Mittel zum Senden/Empfangen von mit Hilfe von TCP/IP, UDP/IP oder RTP/IP über die Datenübertragungsstrecke (NET) übertragenen Daten aufweisen.

6. Datenübertragungsanordnung nach Anspruch 4 oder 5,
**dadurch gekennzeichnet,**
**dass** die Steuereinheit (PC) Mittel zur Anwendung eines Protokolls einer oberen Bluetooth-Protokollschicht (BTL₁) und das Bluetooth-Modul (BT) Mittel zur Anwendung eines Protokolls einer unteren Bluetooth-Protokollschicht (BTL₂) aufweist.

7. Datenübertragungsanordnung nach Anspruch 5 oder 6,
**dadurch gekennzeichnet,**
**dass** die Datenübertragungsstrecke (NET) Teil eines Netzwerks ist, in dem die Steuereinheit (PC) mit einem oder mehreren Bluetooth-Modulen (BT₁-BT₆) verbunden ist.

8. Datenübertragungsanordnung nach einem der Ansprüche 4 bis 7,
**dadurch gekennzeichnet,**
**dass** das Bluetooth-Modul (BT) mit der Steuereinheit (PC) über ein Intranet bzw. das Internet verbunden ist.

## Claims

1. A bidirectional data transmission method between a control unit (PC) and a Bluetooth module (BT) connected to the control unit (PC) by way of a data transmission path (NET),
**characterised in that**
data transmission from the control unit (PC) to the Bluetooth module (BT) has the following method steps:
A) preparing data in the control unit (PC);
B) converting the data into information of a communication interface (HCI_{PC}) of the control unit (PC);
C) transmitting the information of the communication interface (HCI_{PC}) of the control unit (PC) by way of the data transmission path (NET) from the control unit (PC) to the Bluetooth module (BT) by means of an Internet communication protocol; and
D) converting the information of the communication interface (HCI_{PC}) of the control unit into data of the Bluetooth module (BT), and
data transmission from the Bluetooth module (BT) to the control unit (PC) has the following method steps:
E) preparing data in the Bluetooth module (BT);
F) converting the data of the Bluetooth module (BT) into information of a communication interface (HCI_{BT}) of the Bluetooth module (BT);
G) transmitting the information of the communication interface (HCI_{BT}) of the Bluetooth module (BT) by way of the data transmission path (NET) from the Bluetooth module (BT) to the control unit (PC) by means of an Internet communication protocol; and
H) converting the information of the communication interface (HCI_{BT}) of the Bluetooth module (BT) into data of the control unit (PC).

2. A method according to claim 1 **characterised in that**
the method step A) includes the following partial step;
A1) applying the protocol of an upper Bluetooth protocol layer (BTL₁) to the data in the control unit (PC),
the method step D includes the following method step:
D1) applying the protocol of a lower Bluetooth protocol layer (BTL₂) to the data in the Bluetooth module (BT),
the method step E) includes the following method step:
E1) applying the protocol of a lower Bluetooth protocol layer (BTL₂) to the data in the Bluetooth module (BT), and
the method step H) includes the following method step:
HI) applying the protocol of an upper Bluetooth protocol layer (BTL₁) to the data in the control unit (PC).

3. A method according to claim 1 or claim 2 **characterised in that** TCP/IP, UDP/IP or RTP/IP is used as the Internet communication protocol for transmission of the information of the communication interfaces (HCI₁, HCI₂).

4. A data transmission arrangement comprising a control unit (PC) and a Bluetooth module (BT) connected to the control unit (PC) by way of a data transmission path (NET),
**characterised in that**
the control unit (PC) has means for converting data into information of a communication interface (HCI_{PC}) of the control unit (PC) and means for transmitting the information of the communication interface (HCI_{PC}) of the control unit (PC) to the Bluetooth module (BT) by way of the data transmission path (NET) by means of an Internet communication protocol,
the Bluetooth module (BT) has means for receiving the information of the communication interface (HCI_{PC}) of the control unit (PC), which infonnation is transmitted by means of the Internet communication protocol by way of the data transmission path (NET), means for converting the information of the communication interface (HCI_{PC}) of the control unit (PC) into data of the Bluetooth module (BT), means for converting data into information of a communication interface (HCI_{BT}) of the Bluetooth module (BT) and means for transmitting the information of the communication interface (HCI_{BT}) of the Bluetooth module (BT) to the control unit (PC) by way of the data transmission path (NET) by means of an Internet communication protocol, and
the control unit (PC) has means for receiving the information of the communication interface (HCI_{BT}) of the Bluetooth module (BT), which information is transmitted by means of the Internet communication protocol by way of the data transmission path (NET), and means for converting the information of the communication interface (HCI_{BT}) of the Bluetooth module (BT) into data of the control unit (PC).

5. A data transmission arrangement according to claim 4 **characterised in that** the Bluetooth module (BT) and the control unit (PC) each have means for transmitting/receiving data transmitted by means of TCP/IP, UDP/IP or RTP/IP by way of the data transmission path (NET).

6. A data transmission arrangement according to claim 4 or claim 5 **characterised in that** the control unit (PC) has means for applying a protocol of an upper Bluetooth protocol layer (BTL₁) and the Bluetooth module (BT) has means for applying a protocol of a lower Bluetooth protocol layer (BTL₂).

7. A data transmission arrangement according to claim 5 or claim 6 **characterised in that** the data transmission path (NET) is part of a network in which the control unit (PC) is connected to one or more Bluetooth modules (BT₁-BT₆).

8. A data transmission anangement according to one of claims 4 to 7 **characterised in that** the Bluetooth module (BT) is connected to the control unit (PC) by way of an intranet or the Internet.

## Revendications

1. Procédé de transmission bidirectionnelle de données entre une entité de commande (PC) et un module Bluetooth (BT) relié à l'entité de commande (PC) par un trajet de transmission de données (NET).
**caractérisé en ce que**
la transmission de données de l'entité de commande (PC) vers le module Bluetooth (BT) présente les étapes suivantes :
A) préparation de données dans l'éntité de commande (PC) ;
B) transformation des données en informations d'une interface de communication (HCI_{PC}) de l'entité de commande (PC) ;
C) transmission des informations de l'interface de communication (HCI_{PC}) de l'entité de commande (PC) par le trajet de transmission de données (NET) de l'entité de commande (PC) vers le module Bluetooth (BT) à l'aide d'un protocole de communication Internet,
D) transformation des informations de l'interface de communication (HCI_{PC}) de l'entité de commande en données du module Bluetooth (BT), et
la transmission de données du module Bluetooth (BT) vers l'entité de commande (PC) présente les étapes suivantes:
E) préparation de données dans le module Bluetooth (BT) ;
F) transformation des données du module Bluetooth (BT) en informations d'une interface de communication (HCI_{BT}) du module Bluetooth (BT);
G) transmission des informations de l'interface de communication (HCI_{BT}) du module Bluetooth (BT) par le trajet de transmission de données (NET) du module Bluetooth (BT) vers l'entité de commande (PC) à l'aide d'un protocole de communication Internet, et
H) transformation des informations de l'interface de communication (HCI_{BT}) du module Bluetooth (BT) en données de l'entité de commande (PC).

2. Procédé selon la revendication 1.
**caractérisé en ce que**
l'étape de méthode A) comprend les étapes partielles suivantes :
A1) utilisation du protocole d'une couche supérieure de protocole
Bluetooth (BTL₁) pour les données dans l'entité de commande (PC), l'étape de méthode D) comprend l'étape de méthode suivante :
Dl) utilisation du protocole d'une couche inférieure de protocole Bluetooth (BTL₂) pour les données dans le module Bluetooth BT,
l'étape de méthode E) comprend l'étape de méthode suivante :
E1) utilisation du protocole d'une couche inférieure de protocole Bluetooth (BTL₂) pour les données dans le module Bluetooth BT,
et l'étape de méthode H) comprend l'étape de méthode suivante :
Hl) utilisation du protocole d'une couche supérieure de protocole Bluetooth (BTL₁) pour les données dans l'entité de commande (PC).

3. Méthode selon la revendication 1 ou 2,
**caractérisée en ce que**
comme protocole on utilise Internet pour transmettre des informations des interfaces de communication (HCI₁, HCI₂), TCP/IP, UDP/IP ou RTP/IP.

4. Dispositif de transmission de données comportant une entité de commande (PC) et un module Bluetooth BT relié à l'entité de commande (PC) par un trajet de transmission de données (NET),
**caractérisé en ce que**
l'entité de commande (PC) présente des moyens pour transformer des données en informations d'une interface de communication (HCI_{PC}) de l'entité de commande (PC) et des moyens pour transmettre les informations de l'interface de communication (HCI_{PC}) de l'entité de commande (PC) vers le module Bluetooth (BT) par le trajet de transmission de données (NET) à l'aide d'un protocole de communication Internet,
le module Bluetooth (BT) présente des moyens pour recevoir les informations de l'interface de communication (HCI_{PC}) de l'entité de commande (PC) transmises à l'aide du protocole de communication Internet par le trajet de transmission de données (NET), des moyens pour transformer les informations de l'interface de communication (HCI_{PC}) de l'entité de commande (PC) en données du module Bluetooth (BT), des moyens pour transformer des données en informations d'une interface de communication (HCI_{BT}) du module Bluetooth (BT) et des moyens pour transmettre les informations de l'interface de communication (HCI_{BT}) du module Bluetooth (BT) vers l'entité de commande (PC) par le trajet de transmission de données (NET) à l'aide d'un protocole de communication Internet, et l'entité de commande (PC) présente des moyens pour recevoir les informations de l'interface de communication (HCI_{BT}) du module Bluetooth (BT) transmises à l'aide du protocole de communication Internet par le trajet de transmission de données (NET), des moyens pour transformer les informations de l'interface de communication (HCI_{BT}) du module Bluetooth (BT) en données de l'entité de commande (PC).

5. Dispositif de transmission de données selon la revendication 4,
**caractérisé en ce que**
le module Bluetooth (BT) et l'entité de commande (PC) présentent chaque fois des moyens pour émettre/recevoir des données transmises à l'aide de TCP/IP, UDP/IP ou RTP/IP par le trajet de transmission de données (NET).

6. Dispositif de transmission de données selon la revendication 4 ou 5,
**caractérisé en ce que**
l'entité de commande (PC) présente des moyens pour utiliser un protocole d'une couche supérieure de protocole Bluetooth (BTL₁) et le module Bluetooth (BT) des moyens pour utiliser un protocole d'une couche inférieure de protocole Bluetooth (BTL₂).

7. Dispositif de transmission de données selon la revendication 5 ou 6,
**caractérisé en ce que**
le trajet de transmission de données (NET) fait partie d'un réseau dans lequel l'entité de commande (PC) est reliée à un ou plusieurs modules Bluetooth (BT₁ - BT₆).

8. Dispositif de transmission de données selon l'une quelconque des revendications 4 à 7.
**caractérisé en ce que**
le module Bluetooth (BT) est relié à l'entité de commande (PC) par un intranet ou Internet.
